# EUROPÄISCHE PATENTANMELDUNG

(11) **EP 4 843 933 A1**
(43) Veröffentlichungstag der Anmeldung: **25.11.2026**
(21) Anmeldenummer: 26172931.3
(22) Anmeldetag: 17.04.2026
(51) Int. Cl.: B65G 47/64, B07C 5/20

(54) **PRODUKTFÖRDERVORRICHTUNG**

(30) Priorität: 20.05.2025 DE 102025119618
(71) Anmelder: TVI Entwicklung und Produktion GmbH, 83052 Bruckmühl (DE)
(72) Erfinder: Glonner, Tobias, 83052 Bruckmühl (DE); Müller, Christian, 83052 Bruckmühl (DE); Helfrich, Florian, 83052 Bruckmühl (DE)
(74) Vertreter: Weickmann & Weickmann PartmbB

(57) **Zusammenfassung**

Die Erfindung betrifft eine Produktfördervorrichtung (100, 200) zur Förderung von Produkten aus einem Lebensmittel, die Produktfördervorrichtung (100, 200) umfassend eine Fördereinheit (110), welche dazu eingerichtet ist, ein Produkt entlang einer Förderrichtung (FR) zu fördern, und eine Messvorrichtung (112), welche dazu eingerichtet ist, eine Produkteigenschaft, vorzugsweise ein Ist-Gewicht, des Produkts (P) zu erfassen, die Produktfördervorrichtung (100, 200) ferner umfassend eine erste Umlenkeinheit (114, 214), welche in Bezug auf die Förder-richtung (FR) stromabwärts der Fördereinheit (110) angeordnet ist und dazu eingerichtet ist, das Produkt auf der Grundlage der von der Messvorrichtung (112) erfassten Produkteigenschaft, vorzugsweise des von der Messvorrichtung (112) erfassten Ist-Gewichts, des Produkts (P) wahlweise zu wenigstens einer weiteren Fördereinheit (116, 216) der Produktfördervorrichtung (100, 200) oder einer zweiten Umlenkeinheit (118) zu fördern, und die zweite Umlenkeinheit (118), welche in Bezug auf die Förderrichtung (FR), vorzugsweise unmittelbar, stromabwärts der ersten Umlenkeinheit (114, 214) angeordnet ist, und dazu eingerichtet ist, das Produkt von der ersten Umlenkeinheit (114, 214) zu erhalten und das Produkt auf Grundlage der von der Messvorrichtung (112) erfassten Produkteigenschaft, vorzugsweise des von der Messvorrichtung (112) erfassten Ist-Gewichts, des Produkts (P) wahlweise einer ersten Ausleiteinheit (120) oder einer zweiten Ausleit-einheit (122) zuzuführen.

## Beschreibung

Die Erfindung betrifft eine Produktfördervorrichtung zur Förderung von Produkten aus einem Lebensmittel, die Produktfördervorrichtung umfassend eine Fördereinheit, welche dazu eingerichtet ist, ein Produkt entlang einer Förderrichtung zu fördern, und eine Messvorrichtung, welche dazu eingerichtet ist, eine Produkteigenschaft, vorzugsweise ein Ist-Gewicht, des Produkts zu erfassen.

Im Bereich von Aufschneidemaschinen für Lebensmittelprodukte werden derartige Produktfördervorrichtungen beispielsweise auf eine Aufschneidemaschine folgend angeordnet und können unter anderem zum Sortieren der Produkte oder dergleichen verwendet werden. Dabei erfolgt eine Sortierung häufig in Abhängigkeit eines Gewichts, wobei die Lebensmittelprodukte, welche im Folgenden auch teilweise lediglich als "Produkte" bezeichnet sein können, bei Eintritt in eine gattungsgemäße Produktfördervorrichtung gewogen und unter Berücksichtigung eines gemessenen Ist-Gewichts sowie ggf. eines vorbestimmten Soll-Gewichts sortiert werden können. Gleichwohl ist die vorliegende Erfindung nicht auf die Berücksichtigung und Sortierung in Abhängigkeit eines Gewichts beschränkt und grundsätzlich auf beliebige Produkteigenschaften anwendbar.

Produkte, welche nicht dem vorbestimmten Soll-Gewicht oder einem Soll-Gewichtsbereich entsprechen, können somit beispielsweise zu Ausleiteinheiten zugeführt werden, welche die Produkte zu wenigstens einer Nachbearbeitungsposition fördern können. Sofern mehrere solcher Nachbearbeitungspositionen vorhanden sind, müssen die Produkte entsprechend über verschiedene Produktförderpfade geleitet werden, was die Abmessungen der Produktfördervorrichtung häufig vergleichsweise groß ausfallen lässt. Auch müssen die Produkte von Umlenkeinheiten jeweils auf einen bestimmten Produktförderpfad umgelenkt werden, was die Anzahl von förderbaren Produkten pro Zeiteinheit reduzieren kann, wenn eine einzige Umlenkeinheit ein jeweiliges Produkt beispielsweise auf einen bestimmten Pfad von drei Pfaden, nämlich einen Pfad für gutgewichtige Produkte, einen Pfad für zu schwere Produkte und einen Pfad für zu leichte Produkte umleiten muss, da die Umlenkeinheit zunächst immer auf einen dieser Pfade eingestellt werden muss, bevor das jeweilige Produkt weitergefördert werden kann.

Je nach Art eines Produkts bestehen für das Fördern und/oder Sortieren der Produkte außerdem verschiedene Anforderungen an die Produktfördervorrichtung, da sich die Produkte, wie beispielsweise rohe Lebensmittelprodukte oder Lebensmittelverpackungen, welche ein Lebensmittelprodukt enthalten, in ihren Maßen unterscheiden können. Für jeden Anwendungsfall wird somit in der Regel eine speziell hierfür geeignete Produktfördervorrichtungen benötigt, weshalb der Anwender eine entsprechende Vielzahl von Produktfördervorrichtungen vorhalten muss. Das Verwenden einer solchen Vielzahl verschiedener spezifischer Produktfördervorrichtungen zum Realisieren des Förderns und/oder Sortieren der unterschiedlichen Produkte bzw. Produktarten führt somit einerseits zu erhöhten Anschaffungs- bzw. Wartungskosten und andererseits dazu, dass größere Flächen zur Nutzung der verschiedenen Produktfördervorrichtungen benötigt werden.

Es ist daher Aufgabe der Erfindung, eine Produktfördervorrichtung der eingangs genannten Art bereitzustellen, welche hier Abhilfe schaffen kann und insbesondere in der Lage ist, verschiedene Produktarten, insbesondere sowohl rohe Lebensmittelprodukte als auch Verpackungselemente, welche ein Produkt enthalten, zu fördern und/oder zu sortieren.

Diese Aufgabe wird erfindungsgemäß durch eine Produktfördervorrichtung der eingangs genannten Art gelöst, welche ferner umfasst: eine erste Umlenkeinheit, welche in Bezug auf die Förderrichtung stromabwärts der Fördereinheit angeordnet ist und dazu eingerichtet ist, das Produkt auf der Grundlage der von der Messvorrichtung erfassten Produkteigenschaft, vorzugsweise des von der Messvorrichtung erfassten Ist-Gewichts, des Produkts wahlweise zu wenigstens einer weiteren Fördereinheit der Produktfördervorrichtung oder einer zweiten Umlenkeinheit zu fördern, und die zweite Umlenkeinheit, welche in Bezug auf die Förderrichtung, vorzugsweise unmittelbar, stromabwärts der ersten Umlenkeinheit angeordnet ist, und dazu eingerichtet ist, das Produkt von der ersten Umlenkeinheit zu erhalten und das Produkt auf Grundlage der von der Messvorrichtung erfassten Produkteigenschaft, vorzugsweise des von der Messvorrichtung erfassten Ist-Gewichts, des Produkts wahlweise einer ersten Ausleiteinheit oder einer zweiten Ausleiteinheit zuzuführen.

Unter einer Produkteigenschaft kann hierbei, zusätzlich zu dem Gewicht des Produkts, beispielsweise unter anderem die Größe, die Form, oder eine optische oder optisch ermittelbare Eigenschaft, wie ein Fettgehalt oder dergleichen, des Produkts verstanden werden. Um die entsprechenden Eigenschaften zu erfassen, kann die Messvorrichtung also nicht nur eine Waage, sondern auch eine Scan-Vorrichtung, einen Sensor, insbesondere einen optischen Sensor, vorzugsweise eine Kamera, oder eine Kombination davon umfassen.

Demnach können, durch die Tatsache, dass die erfindungsgemäße Produktfördervorrichtung sowohl die erste Umlenkeinheit als auch die zweite Umlenkeinheit umfasst, Produkte, welche hinsichtlich der Produkteigenschaft einen vorbestimmten Soll-Zustand, beispielsweise ein vorbestimmtes Soll-Gewicht, aufweisen, von der ersten Umlenkeinheit an die wenigstens eine weitere Fördereinheit weitergeleitet werden, während Produkte, welche einen von dem vorbestimmten Soll-Zustand abweichenden Ist-Zustand, insbesondere ein von dem vorbestimmten Soll-Gewicht abweichendes Ist-Gewicht, aufweisen, zu der zweiten Umlenkeinheit weitergeleitet werden können. Während die zweite Umlenkeinheit das Produkt auf Grundlage der von der Messvorrichtung erfassten Produkteigenschaft, vorzugsweise des von der Messvorrichtung erfassten Ist-Gewichts, wahlweise zu der ersten Ausleiteinheit oder der zweiten Ausleiteinheit zuführt, kann die erste Umlenkeinheit bereits ein weiteres Produkt aufnehmen und wahlweise der weiteren Fördereinheit oder der zweiten Umlenkeinheit zuführen, wodurch eine maximale Anzahl sortierbarer Produkte pro Zeiteinheit erhöht werden kann und das Sortieren der Produkte effizienter gestaltet werden kann. Auch erfolgt das Sortieren durch die erste und die zweite Umlenkeinheit vorzugsweise in Förderrichtung unmittelbar nacheinander, so dass die Produktfördervorrichtung, insbesondere in Förderrichtung, möglichst kompakt ausgebildet sein kann.

Die Produktfördervorrichtung kann ferner eine Steuereinheit umfassen, welche betriebsmäßig einerseits mit wenigstens einem Signalausgang der Messvorrichtung und andererseits mit jeweils einem Signaleingang der ersten Umlenkeinheit und der zweiten Umlenkeinheit verbunden sein kann. Die Steuereinheit kann dazu eingerichtet sein, zu bestimmen, ob der Ist-Zustand einen Soll-Zustand beziehungsweise einen Soll-Zustand innerhalb einer vorbestimmten zulässigen Toleranz (Soll-Zustand ± Toleranz, d.h. Erfüllung des Soll-Zustands einschließlich einer zulässigen Abweichung) aufweist oder nicht, und darauf basierend die erste Umlenkeinheit und die zweite Umlenkeinheit betätigen. Wenn nicht anderweitig definiert, kann nachfolgend der vorbestimmte Toleranzbereich des Soll-Zustands als in der Bezeichnung "Soll-Zustand" inbegriffen gelten. Folgende Förderpfade sind beispielsweise für einen Entscheidungsspielraum der Steuereinheit der Produktfördervorrichtung denkbar:
i. Im Falle eines Produkts, welches dem Soll-Zustand entspricht, kann die Steuereinheit die erste Umlenkeinheit dazu veranlassen, das Produkt der weiteren Fördereinheit der Produktfördervorrichtung zuzuführen.
ii. Im Falle eines Produkts, welches dem Soll-Zustand nicht entspricht, kann die Steuereinheit die erste Umlenkeinheit dazu veranlassen, das Produkt der zweiten Umlenkeinheit zuzuführen.
iii. Im Falle eines Produkts, welches den Soll-Zustand unterschreitet, kann die Steuereinheit die erste Umlenkeinheit dazu veranlassen, das Produkt der zweiten Umlenkeinheit zuzuführen, und die zweite Umlenkeinheit dazu veranlassen, das Produkt einer ersten Ausleiteinheit zuzuführen.
iv. Im Falle eines Produkts, welches den Soll-Zustand überschreitet, kann die Steuereinheit die erste Umlenkeinheit dazu veranlassen, das Produkt der zweiten Umlenkeinheit zuzuführen, und die zweite Umlenkeinheit dazu veranlassen, das Produkt einer zweiten Ausleiteinheit zuzuführen.

Diese Beispiele der Förderpfade sind hierbei lediglich exemplarischer Natur und beziehen sich beispielhaft auf eine Produktfördervorrichtung mit zwei Umlenkeinheiten, welche jeweils in der Lage sind, zwei Umlenkpositionen einzunehmen. Jedoch ist auch denkbar, dass die Produktfördervorrichtung mehr als zwei Umlenkeinheiten, Umlenkeinheiten mit mehr als zwei möglichen Umlenkpositionen oder eine Kombination davon umfasst. Unter einer Umlenkposition kann hierbei eine Position der Umlenkeinheit verstanden werden, in welcher die Umlenkeinheit derart eingestellt ist, dass sie das Produkt beispielsweise zu der weiteren Fördereinheit zuführen kann.

Die Produkteigenschaft kann ein Ist-Gewicht des Produkts sein. Es sei darauf hingewiesen, dass die erfindungsgemäße Produktfördervorrichtung nachfolgend abschnittsweise mit Bezug auf eine Messvorrichtung beschrieben wird, welche lediglich eine Waage umfasst. Es handelt sich hierbei jedoch nur um ein Ausführungsbeispiel, wobei die Produktfördervorrichtung nicht darauf beschränkt ist. Die erfindungsgemäße Produktfördervorrichtung kann somit auch eine Messvorrichtung umfassen, welche für eine Erkennung von nicht-gewichtsbezogenen Produkteigenschaften notwendige technische Merkmale umfasst, wie vorstehend beschrieben.

Bei der Messvorrichtung kann es sich ferner beispielsweise auch um ein Wiegeband handeln. Ferner ist die Messvorrichtung vorzugsweise in Bezug auf die Förderrichtung stromaufwärts der ersten und der zweiten Umlenkeinheit angeordnet.

Die erste und/oder der zweite Umlenkeinheit kann bevorzugt eine Wippeneinheit, noch bevorzugter ein Wippenband, sein.

Die erste Umlenkeinheit kann dazu eingerichtet sein, in einem Fall, in welchem das Ist-Gewicht des Produkts einem vorbestimmten Soll-Gewicht des Produkts oder einem Gewicht entspricht, welches von dem Soll-Gewicht um höchstens eine vorbestimmte Abweichung abweicht, das Produkt zu der wenigstens einen weiteren Fördereinheit zu fördern, wobei die wenigstens eine weitere Fördereinheit insbesondere dazu eingerichtet sein kann, das Produkt zu einer an oder in der Produktfördervorrichtung angeordneten Endposition oder zu einer der Produktfördervorrichtung in Förderrichtung nachgelagerten Verarbeitungseinheit zu fördern. Die an oder in der Produktfördervorrichtung angeordnete Endposition kann auch als Verarbeitungsposition bezeichnet werden, da diese beispielsweise eine Position darstellen kann, von welcher eine weitere Verarbeitung des Produkts ausgehen kann.

Hierbei kann die Verarbeitungseinheit beispielsweise eine Einlegeeinheit zum Einlegen des Produkts in ein Verpackungselement sein, welches vorzugsweise von einer Verpackungsmaschine bereitgestellt wird. Die Endposition kann jedoch auch eine Position zur beispielsweise händischen oder automatisierten Entnahme des Produkts sein.

Ferner kann die erste Umlenkeinheit dazu eingerichtet sein, in einem Fall, in welchem das Ist-Gewicht des Produkts um mehr als eine oder die vorbestimmte Abweichung von einem oder dem Soll-Gewicht des Produkts abweicht, das Produkt zu der zweiten Umlenkeinheit zu fördern. Ein Zuführen zu der zweiten Umlenkeinheit kann also bedeuten, dass das Produkt nicht dem vorbestimmten Soll-Gewicht entspricht.

Wenn das Ist-Gewicht des Produkts um mehr als die vorbestimmte Abweichung von dem Soll-Gewicht abweicht und geringer als das vorbestimmte Soll-Gewicht ist, kann die zweite Umlenkeinheit dazu eingerichtet sein, das Produkt, einer aus der ersten Ausleiteinheit und der zweiten Ausleiteinheit zuzuführen. Zusätzlich oder alternativ kann, wenn das Ist-Gewicht des Produkts um mehr als die vorbestimmte Abweichung von dem Soll-Gewicht abweicht und höher als das vorbestimmte Soll-Gewicht ist, die zweite Umlenkeinheit dazu eingerichtet sein, das Produkt der anderen aus der ersten Ausleiteinheit und der zweiten Ausleiteinheit zuzuführen. Produkte können dabei, wie nachstehend näher beschrieben, von der ersten bzw. der zweiten Ausleiteinheit zu einer, beispielsweise händischen oder automatisierten, Nachbearbeitung für zu "schwere" oder zu "leichte" Produkte geführt werden.

Die erste und/oder die zweite Ausleiteinheit kann/können dazu eingerichtet sein, das Produkt zu einer jeweiligen Nachbearbeitungsposition oder Nachbearbeitungseinheit zu fördern. Die Nachbearbeitungsposition kann für eine händische Nachbearbeitung oder automatisierte Nachbearbeitung mittels der Nachbearbeitungseinheit vorgesehen sein.

Das Produkt kann ein Lebensmittelrohprodukt oder ein Lebensmittelrohprodukt sein, welches in oder auf einem Verpackungselement angeordnet ist. Die erfindungsgemäße Produktfördervorrichtung ermöglicht das Fördern von Produkten mit verschiedenen Produkteigenschaften, insbesondere hinsichtlich der Produktmaße, beispielsweise von Lebensmittelrohprodukten oder Verpackungselementen, welche wenigstens ein Lebensmittelrohprodukt enthalten, für welche gemäß dem Stand der Technik jeweils separate Produktfördervorrichtungen herangezogen werden mussten. Somit kann die erfindungsgemäße Produktfördervorrichtung eine Anwendbarkeit auf verschiedene Produkttypen ermöglichen, wodurch ein Bedarf an einer Mehrzahl gattungsgemäßer Produktfördervorrichtungen reduziert oder nichtig wird. Somit können Anschaffungs- bzw. Wartungskosten sowie der Raumbedarf durch eine erfindungsgemäße Produktfördervorrichtung reduziert werden. Ein Lebensmittelrohprodukt kann sowohl ein unverarbeitetes oder nur grob verarbeitetes Stück aus einem Lebensmittel, beispielsweise ein Steak oder dergleichen, als auch eine Lebensmittelproduktscheibe oder gestapelte oder geschindelte Lebensmittelproduktscheiben bezeichnen, etwa beispielsweise aus Wurst, Schinken, Käse oder Fisch.

Die erste und/oder die zweite Ausleiteinheit kann/können, vorzugsweise an einem jeweiligen der zweiten Umlenkeinheit abgewandten Ende davon, um eine Schwenkachse schwenkbar an der Produktfördervorrichtung angebracht sein. Dabei kann/können die erste und/oder die zweite Ausleiteinheit insbesondere relativ zu einem Grundgestell der Produktfördervorrichtung schwenkbar angebracht sein. Aufgrund der Schwenkbarkeit der ersten und/oder der zweiten Ausleiteinheit kann die Produktfördervorrichtung auf verschiedene Produkthöhen eingestellt werden, wodurch verschiedene Produkte oder Funktionen mit ein und derselben Produktfördervorrichtung verarbeitet bzw. umgesetzt werden können. Handelt es sich beispielsweise bei dem zu fördernden Produkt um ein Lebensmittelrohprodukt, können die erste und die zweite Ausleiteinheit näher zueinander positioniert sein als im Vergleich zu einem Fall, in welchem ein Verpackungselement mit darin oder darauf angeordnetem Lebensmittelrohprodukt gefördert wird, da die Maße eines Verpackungselements im Regelfall größer sind als die eines Lebensmittelrohprodukts. "Näher zueinander" kann hier insbesondere bedeuten, dass die freien Enden der beiden Ausleiteinheiten, insbesondere die Enden, an welchen die erste und/oder die zweite Ausleiteinheit nicht an der Produktfördervorrichtung schwenkbar angebracht ist/sind, in einer vertikalen Richtung näher zueinander positioniert sein können. Hierdurch kann ein Abstand zwischen wenigstens zwei zur Übergabe der Produkte an die jeweilige Ausleiteinheit erforderlichen Umlenkpositionen der zweiten Umlenkeinheit reduziert werden, weshalb ein Verstellungsaufwand der zweiten Umlenkeinheit verringert werden kann. Hierbei kann/können die erste und/oder die zweite Ausleiteinheit ferner beispielsweise als ein Förderband ausgebildet sein.

Die Messvorrichtung kann der Fördereinheit zugeordnet sein, vorzugsweise in der Fördereinheit integriert sein. "Integriert" kann hier bedeuten, dass es sich bei der Fördereinheit um ein Wiegeband oder dergleichen handelt. Ein Integrieren der Messvorrichtung in die Fördereinheit kann die Komplexität der Produktfördervorrichtung verringern, da die Produktfördervorrichtung um ein separates Element bzw. eine separate Funktionseinheit reduziert wird.

Ferner kann die Produktfördervorrichtung gemäß einem Ausführungsbeispiel wenigstens eine weitere Messvorrichtung umfassen, welche der ersten Umlenkeinheit und/oder der zweiten Umlenkeinheit zugeordnet ist, vorzugsweise in der ersten Umlenkeinheit und/oder der zweiten Umlenkeinheit integriert ist. Hierdurch kann die Flexibilität der Produktfördervorrichtung und/oder die Genauigkeit des Sortierens erhöht werden, da das Produktgewicht an verschiedenen Stellen im Verlauf des Produktförderns, insbesondere wiederholt, gemessen werden kann.

Es ist ebenso denkbar, dass die wenigstens eine weitere Fördereinheit in einer Höhenrichtung verstellbar an der Produktfördervorrichtung angeordnet ist. Unter der "Höhenrichtung" kann hier eine Richtung verstanden werden, welche im Wesentlichen parallel zur Schwerkraftrichtung verläuft, also beispielsweise im Wesentlichen orthogonal einem Untergrund, auf welchem die Produktfördervorrichtung abgestützt ist. Die wenigstens eine weitere Fördereinheit kann hier insbesondere relativ zu einem Grundgestell der Produktfördervorrichtung verstellbar an der Produktfördervorrichtung angeordnet sein. Auch hier kann die Höhenverstellung der wenigstens einen weiteren Fördereinheit ermöglichen, dass verschiedene Produkte mit unterschiedlichen Abmessungen, insbesondere mit unterschiedlicher Höhe, von der erfindungsmäßigen Produktfördervorrichtung gefördert werden können, ohne auf unterschiedliche unabhängige Produktfördervorrichtung zurückgreifen zu müssen.

Die Produktfördervorrichtung kann gemäß einem weiteren Ausführungsbeispiel ferner eine Verpackungselement-Bereitstellungseinheit umfassen, welche dazu eingerichtet ist, der Produktfördervorrichtung, insbesondere der wenigstens einen weiteren Fördereinheit, ein oder mehrere, vorzugsweise leere, Verpackungselemente entlang einer Zuführrichtung zuzuführen. Somit kann bevorzugt eine Verpackungseinheit in die Produktfördervorrichtung integriert werden, wodurch die Produktfördervorrichtung ferner zum Einlegen eines Produkts in ein Verpackungselement verwendet werden kann. Vorzugsweise kann die Verpackungselement-Bereitstellungseinheit dazu eingerichtet sein, das eine oder die mehreren Verpackungselemente im Bereich der ersten Umlenkeinheit oder in Förderrichtung stromabwärts der ersten Umlenkeinheit der Produktfördervorrichtung zuzuführen. Hierbei kann ein leeres Verpackungselement auch als "Leerverpackung" bezeichnet werden.

Diesbezüglich kann die erste Umlenkeinheit dazu eingerichtet sein, das Produkt in ein jeweiliges Verpackungselement einzulegen, wenn sich das jeweilige Verpackungselement im Bereich der ersten Umlenkeinheit befindet. Im Anschluss kann das jeweilige Verpackungselement durch die wenigstens eine weitere Fördereinheit abgefördert werden. Es kann daher ermöglicht werden, dass gutgewichtige Produkte direkt in der Produktfördervorrichtung, insbesondere durch die erste Umlenkeinheit, jeweils in ein Verpackungselement eingelegt werden können und die Produkte nicht erst einer zu der Produktfördervorrichtung gehörenden, separaten Einlegevorrichtung zugeführt werden müssen. Somit kann der Raumbedarf weiter reduziert werden, da auf eine zusätzliche Einlegevorrichtung bevorzugt verzichtet werden kann.

Hierbei kann die Zuführrichtung vorzugsweise im Wesentlichen orthogonal zu der Förderrichtung verlaufen. Ein wesentlicher Vorteil des Zuführens eines Verpackungselements im Wesentlichen orthogonal zu der Förderrichtung besteht darin, dass sich die Zuführpfade der Produkte und der Verpackungselemente vorzugsweise nicht überlappen, wodurch die Zuführpfade für die Produkte und die Verpackungselemente konstruktiv einfach und unabhängig voneinander ausgestaltet werden können, was insbesondere bei einer modularen Bauweise von Vorteil sein kann. Ferner wird eine präzise und kontrollierte Platzierung der Verpackungselemente ermöglicht, so dass das Produkt problemlos, insbesondere durch die erste Umlenkeinheit, in das jeweilige Verpackungselement eingelegt werden kann.

Darüber hinaus kann/können die erste Umlenkeinheit und/oder die zweite Umlenkeinheit, vorzugsweise an einem jeweiligen der Fördereinheit zugewandten Ende davon, um eine Schwenkachse schwenkbar an der Produktfördervorrichtung angebracht sein. Hierbei kann die erste Umlenkeinheit und/oder die zweite Umlenkeinheit jeweils bevorzugt als ein ein Wippenförderer, insbesondere Wippenband, ausgebildet sein.

Die erste Ausleiteinheit und die zweite Ausleiteinheit können in einer Draufsicht im Wesentlichen übereinander angeordnet sein, insbesondere so, dass die erste Ausleiteinheit von der zweiten Ausleiteinheit im Wesentlichen vollständig verdeckt ist oder umgekehrt. Unter "Draufsicht" kann hier eine Perspektive verstanden werden, bei welcher die Produktfördervorrichtung von oben, insbesondere in Richtung der Höhenrichtung, betrachtet wird. Eine derartige Anordnung der ersten und der zweiten Ausleiteinheit kann einen in einer Breitenrichtung der Produktfördervorrichtung benötigten Bauraum der Produktfördervorrichtung verringern.

Nachzutragen ist noch, dass die wenigstens eine weitere Fördereinheit, vorzugsweise an einem der Fördereinheit abgewandten Ende davon, um eine Schwenkachse schwenkbar an, insbesondere einem Grundgestell, der Produktfördervorrichtung angebracht sein. Somit kann die Produktfördervorrichtung, insbesondere die wenigstens eine weitere Fördereinheit, auf verschiedene Produkte, welche beispielsweise unterschiedliche Größen aufweisen können, oder auf das Verwenden von, vorzugsweise leeren, Verpackungselementen eingestellt werden, welche durch die Verpackungselement-Bereitstellungseinheit bereitgestellt werden.

Die Erfindung wird im Folgenden anhand der beigefügten Zeichnung an Ausführungsbeispielen näher erläutert werden. Es stellen dar:
- Figur 1: eine Seitenansicht einer erfindungsgemäßen Produktfördervorrichtung gemäß einem ersten Ausführungsbeispiel, in welcher ein spezifischer Produktförderpfad durch die erste und zweite Umlenkeinheit gebildet ist;
- Figur 2: eine Seitenansicht der erfindungsgemäßen Produktfördervorrichtung gemäß dem ersten Ausführungsbeispiel, in welcher ein weiterer spezifischer Produktförderpfad durch die erste und zweite Umlenkeinheit gebildet ist;
- Figur 3: eine perspektivische Ansicht der erfindungsgemäßen Produktfördervorrichtung gemäß dem ersten Ausführungsbeispiel;
- Figur 4: eine perspektivische Ansicht einer erfindungsgemäßen Produktfördervorrichtung gemäß einem zweiten Ausführungsbeispiel; und
- Figur 5: eine weitere perspektivische Ansicht der erfindungsgemäßen Produktfördervorrichtung gemäß dem zweiten Ausführungsbeispiel.

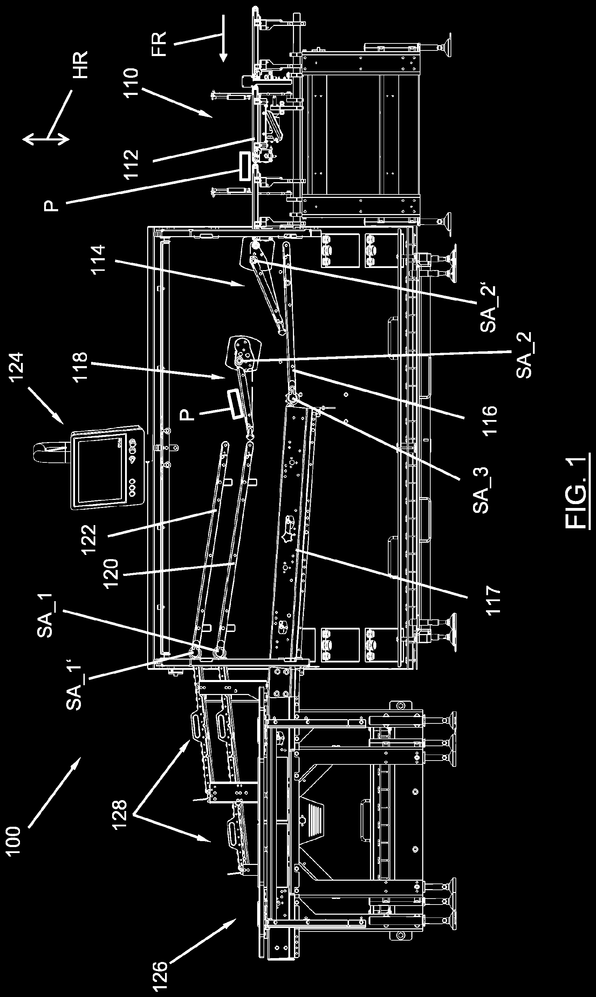

In Figur 1 ist eine erfindungsgemäße Produktfördervorrichtung gemäß einem ersten Ausführungsbeispiel in einer Seitenansicht dargestellt und allgemein durch das Bezugszeichen 100 gekennzeichnet. Die Produktfördervorrichtung 100 kann hierbei als eine einspurige oder mehrspurige Produktfördervorrichtung 100 ausgebildet sein, wobei die Produktfördervorrichtung gemäß Figur 1 hier lediglich einspurig ausgebildet ist.

Die Produktfördervorrichtung 100 umfasst eine Fördereinheit 110, welche dazu eingerichtet ist, ein in Fig. 1 lediglich schematisch dargestelltes Produkt P entlang einer Förderrichtung FR zu fördern. Der Fördereinheit 110 kann eine Messvorrichtung 112 zugeordnet sein, welche als Waage oder Wiegeband ausgebildet sein kann und dazu eingerichtet ist, ein Ist-Gewicht eines Produkts P zu erfassen. In dem dargestellten Ausführungsbeispiel ist die Messvorrichtung 112 zwischen zwei Abschnitten der Fördereinheit 110 eingefügt, wobei die Oberflächen der Abschnitte der Fördereinheit 110 sowie die Oberfläche der Messvorrichtung 112 in einer Ebene liegen, welche sich im Wesentlichen parallel zu der Förderrichtung FR und orthogonal zu einer Höhenrichtung HR erstreckt. Somit kann das Produkt P problemlos von einem Abschnitt der Fördereinheit 110 über die Messvorrichtung 112 zu dem anderen Abschnitt der Fördereinheit 110 gefördert werden.

Stromabwärts in Bezug auf die Förderrichtung FR ist der Fördereinheit 110 eine erste Umlenkeinheit 114 nachgeordnet, welche dazu eingerichtet ist, das Produkt P auf der Grundlage des von der Messvorrichtung 112 erfassten Ist-Gewichts des Produkts P wahlweise zu wenigstens einer weiteren Fördereinheit 116 der Produktfördervorrichtung 100 oder einer zweiten Umlenkeinheit 118 zu fördern. Die zweite Umlenkeinheit 118, welche in dem dargestellten Ausführungsbeispiel in Bezug auf die Förderrichtung FR unmittelbar stromabwärts der ersten Umlenkeinheit 114 angeordnet ist, ist vorliegend dazu eingerichtet, das Produkt P von der ersten Umlenkeinheit 114 zu erhalten und das Produkt P auf Grundlage des von der Messvorrichtung 112 erfassten Ist-Gewichts des Produkts P wahlweise einer ersten Ausleiteinheit 120 oder einer zweiten Ausleiteinheit 122 zuzuführen. Als Folge hiervon ist die Produktfördervorrichtung 100 in der Lage, verschiedene Produktförderpfade zu realisieren, über welche die Produkte P gefördert werden können, um sie in dem dargestellten Ausführungsbeispiel schließlich entweder einer Verarbeitungs- oder Endposition 126 oder einer Nachbearbeitungspositionen 128 zuzuführen.

Um die erste und/oder die zweite Umlenkeinheit 114, 118 zu betätigen, insbesondere auf einen der vorstehend beschriebenen Produktförderpfade einzustellen, kann die Produktfördervorrichtung 100 ferner eine Steuereinheit 124 umfassen, welche dazu eingerichtet ist, die erste Umlenkeinheit 114 und die zweite Umlenkeinheit 118 auf Grundlage von Informationen der Messvorrichtung 112, insbesondere des von der Messvorrichtung 112 erfassten Ist-Gewichts, zu steuern.

Somit kann die wenigstens eine weitere Fördereinheit 116 der Produktfördervorrichtung 100 dazu eingerichtet sein, das Produkt P, optional über noch eine weitere Fördereinheit 117, zu der Verarbeitungsposition 126 zuzuführen. Unter der Verarbeitungsposition 126 kann ebenso eine Verarbeitungseinheit verstanden werden, in welcher das Produkt weiterverarbeitet wird.

Ebenso kann/können daher die erste Ausleiteinheit 120 und/oder die zweite Ausleiteinheit 122 dazu eingerichtet sein, ein Produkt P zu entsprechenden Nachbearbeitungspositionen 128 zuzuführen, an welchen das Produkt P entweder händisch oder automatisch nachbearbeitet werden kann. Bei den Nachbearbeitungspositionen 128 kann es sich ebenso um Nachbearbeitungseinheiten handeln.

Ferner ist der Figur 1 zu entnehmen, dass einerseits die erste Ausleiteinheit 120 und die zweite Ausleiteinheit 122 um entsprechende Schwenkachsen SA_1 bzw. SA_1' und andererseits die erste Umlenkeinheit 114 und die zweite Umlenkeinheit 118 um entsprechende Schwenkachsen SA_2 bzw. SA_2' schwenkbar an der Produktfördervorrichtung 100, insbesondere an einem Grundgestell der Produktfördervorrichtung 100, angebracht sind. Hierbei können die erste Ausleiteinheit 120 und die zweite Ausleiteinheit 122 an einem jeweiligen der zweiten Umlenkeinheit 118 abgewandten Ende davon schwenkbar an der Produktfördervorrichtung 100 angebracht sein. Die erste Umlenkeinheit 114 und die zweite Umlenkeinheit 118 können hier an einem jeweiligen der Fördereinheit 110 zugewandten Ende davon an der Produktfördervorrichtung 100 angebracht sein.

Die Schwenkbarkeit der ersten Ausleiteinheit 120 und/oder der zweiten Ausleiteinheit 122 kann ermöglichen, dass die freien Enden der ersten Ausleiteinheit 120 und der zweiten Ausleiteinheit 122, welche der zweiten Umlenkeinheit 118 zugewandt sind, voneinander weg bzw. aufeinander zu bewegt werden können, um somit unterschiedliche Abstände in Bezug auf die Höhenrichtung HR zwischen der ersten Ausleiteinheit 120 und der zweiten Ausleiteinheit 122 zu realisieren. Somit können Produkte P mit verschiedenen Maßen/Anforderungen über die erste Ausleiteinheit 120 oder die zweite Ausleiteinheit 122 ausgeleitet werden.

Hinsichtlich der Schwenkbarkeit der ersten Umlenkeinheit 114 und der zweiten Umlenkeinheit 118 wird ermöglicht, die Produktfördervorrichtung 100, insbesondere auf Grundlage eines Verhältnisses des vorbestimmten Soll-Gewichts und des Ist-Gewichts, welches durch die Messvorrichtung 112 bestimmt wird, auf einen jeweiligen Produktförderpfad einzustellen.

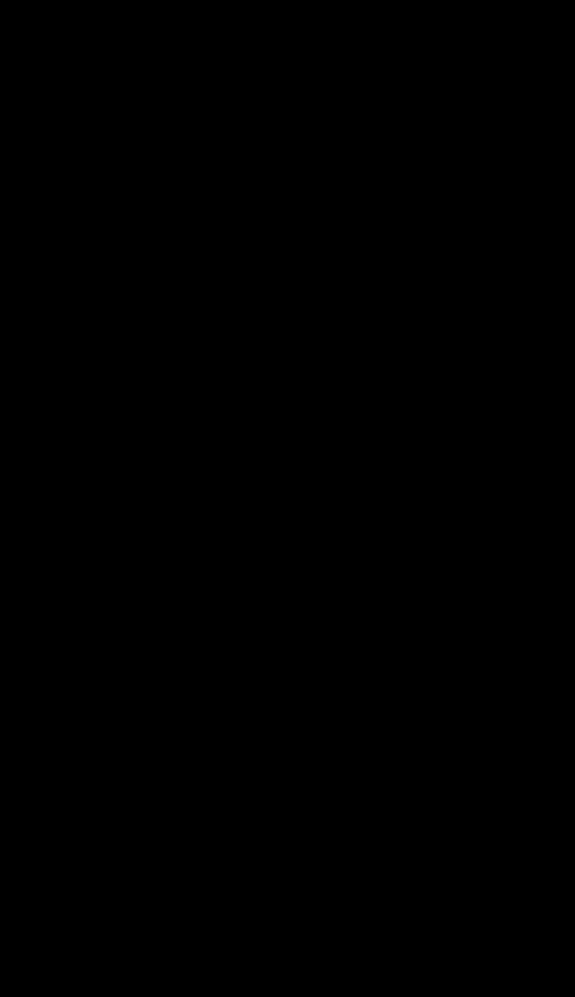

Wie ebenso in der Beschreibungseinleitung dargelegt, können somit durch die erste Umlenkeinheit 114 und die zweite Umlenkeinheit 118 unterschiedliche Produktförderpfade realisiert werden. Figur 1 stellt diesbezüglich beispielsweise einen Fall dar, in welchem das Ist-Gewicht des Produkts P einem vorbestimmten Soll-Gewicht entspricht oder höchstens eine vorbestimme Abweichung hiervon aufweist, weshalb sich die erste Umlenkeinheit 114 in einer Position befindet, in welcher sie dazu eingerichtet ist, das Produkt P der wenigstens einen weiteren Fördereinheit 116 zuzuführen. Figur 2 stellt hingegen beispielsweise einen Fall dar, in welchem das Ist-Gewicht des Produkts P das Soll-Gewicht um mehr als die vorbestimme Abweichung überschreitet, weshalb die erste Umlenkeinheit 114 derart eingestellt ist, dass sie das Produkt P der zweiten Umlenkeinheit 118 zuführt, und die zweite Umlenkeinheit 118 derart eingestellt ist, dass sie das Produkt P der zweiten Ausleiteinheit 122 zuführt. Das Produkt P kann somit zu der der zweiten Ausleiteinheit 122 stromabwärts in Bezug auf die Förderrichtung FR nachgeordneten Nachbearbeitungsposition 128 gefördert werden, an welcher das Produkt P, welches ein Ist-Gewicht aufweist, welches das Soll-Gewicht um mehr als die vorbestimmte Abweichung überschreitet, entweder händisch oder automatisch auf das vorbestimmte Soll-Gewicht gebracht oder als Ausschuss entfernt wird.

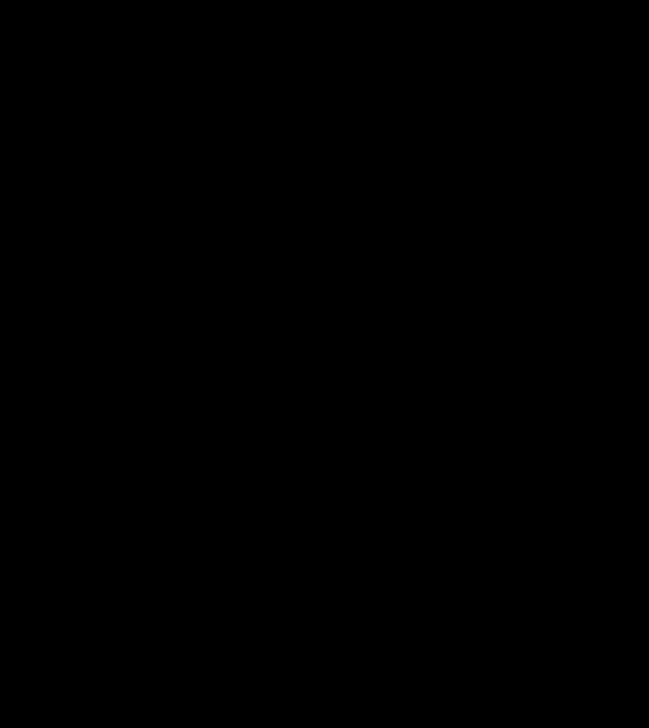

Figur 3 stellt eine erfindungsgemäße Produktfördervorrichtung 100 in einer perspektivischen Ansicht dar, bei welcher sich die erste Umlenkeinheit 114 und die zweite Umlenkeinheit 118 in der in Figur 2 dargestellten Positionierung befinden. Hieraus wird erneut ersichtlich wie ein Produkt P (in Fig. 3 nicht dargestellt) von der Fördereinheit 110 über die Messvorrichtung 112, die erste Umlenkeinheit 114, die zweite Umlenkeinheit 118 und die zweite Ausleiteinheit 122 zu der Nachbearbeitungsposition 128 gefördert wird, um dort einer händischen oder automatischen Nachbearbeitung unterzogen zu werden.

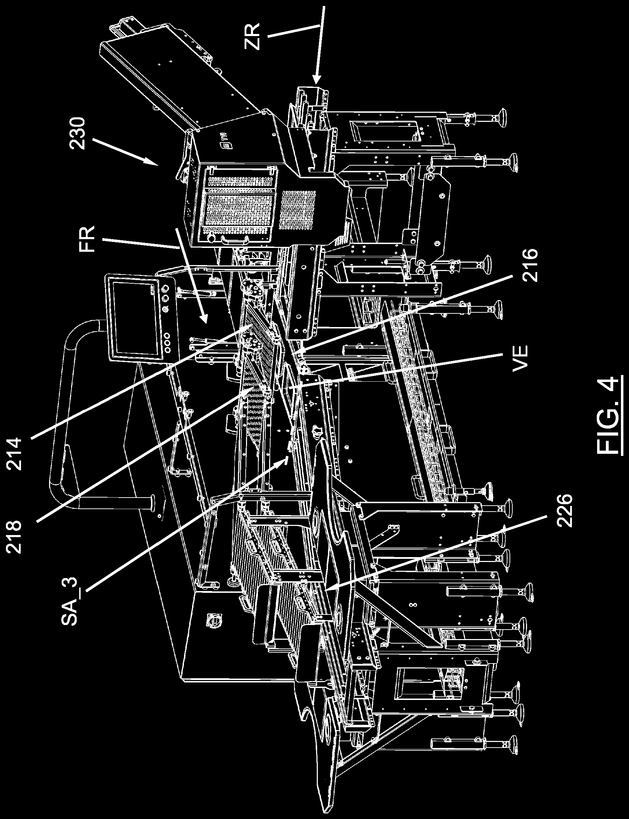

In Figur 4 ist eine erfindungsgemäße Produktfördervorrichtung gemäß einer zweiten Ausführungsform dargestellt, welche allgemein mit dem Bezugszeichen 200 bezeichnet ist. Analoge Bezugszeichen sind hierbei gegenüber den Figuren 1 bis 3 um 100 erhöht, wobei lediglich auf die Abschnitte bzw. Funktionen der Produktfördervorrichtung 200 eingegangen werden wird, in welchen sich die Produktfördervorrichtung 200 von der Produktfördervorrichtung 100 unterscheidet, und ansonsten auf die vorstehende Diskussion der Produktfördervorrichtung 100 verwiesen wird.

Die Produktfördervorrichtung 200 umfasst ferner eine Verpackungselement-Bereitstellungseinheit 230, welche dazu eingerichtet ist, der wenigstens einen weiteren Fördereinheit 216 der Produktfördervorrichtung 200 ein oder mehrere leere Verpackungselemente VE entlang einer Zuführrichtung ZR zuzuführen. Die Zuführrichtung ZR verläuft hier im Wesentlichen orthogonal zu der Förderrichtung FR. Die Verpackungselement-Bereitstellungseinheit 230 ermöglicht dabei, dass die Produktfördervorrichtung 200 dazu verwendet werden kann, Produkte P in ein Verpackungselement VE einzulegen. Hierbei kann die wenigstens eine weitere Fördereinheit 216, sofern erforderlich, höhenverstellt werden, so dass die Produktfördervorrichtung 200 dazu eingerichtet sein kann, leere Verpackungselemente VE auf der wenigstens einen weiteren Fördereinheit 216 aufzunehmen. Produkte P, welche ein Ist-Gewicht aufweisen, welches einem Soll-Gewicht entspricht, können somit durch die erste Umlenkeinheit 214 in ein entsprechendes Verpackungselement VE eingelegt werden, wodurch auf eine zusätzliche Einlegeeinheit verzichtet werden kann.

Um die Höhenverstellbarkeit zu realisieren, ist es ebenso denkbar, dass die wenigstens eine weitere Fördereinheit 216, um eine Schwenkachse SA_3 schwenkbar an der Produktfördervorrichtung 200 angebracht ist. Demnach kann die wenigstens eine weitere Fördereinheit 216 an einem Ende, welches der Verarbeitungsposition 226 zugewandt ist, an der Produktfördervorrichtung 200 schwenkbar angeordnet sein. In einem Fall, in welchem ein gutgewichtiges Produkt P durch die erste Umlenkeinheit 214 in ein Verpackungselement VE eingelegt werden soll, welches der wenigstens einen weiteren Fördereinheit 216 durch die Verpackungselement-Bereitstellungseinheit 230 zugeführt wurde, kann die wenigstens eine weitere Fördereinheit 216 in Höhenrichtung HR nach unten verschwenkt werden. Somit kann die Produktfördervorrichtung 200 auf die Anforderungen der Verpackungselemente VE angepasst werden, welche sich von Anforderungen an Lebensmittelrohprodukte unterscheiden können. Die Schwenkbarkeit der wenigstens einen weiteren Fördereinheit 216, welche sich hier auf die Produktfördervorrichtung 200 der zweiten Ausführungsform bezieht, kann analog auf die Produktfördervorrichtung 100 der ersten Ausführungsform übertragen werden, wie insbesondere in Fig. 1 durch die Schwenkachse SA_3 erkennbar.

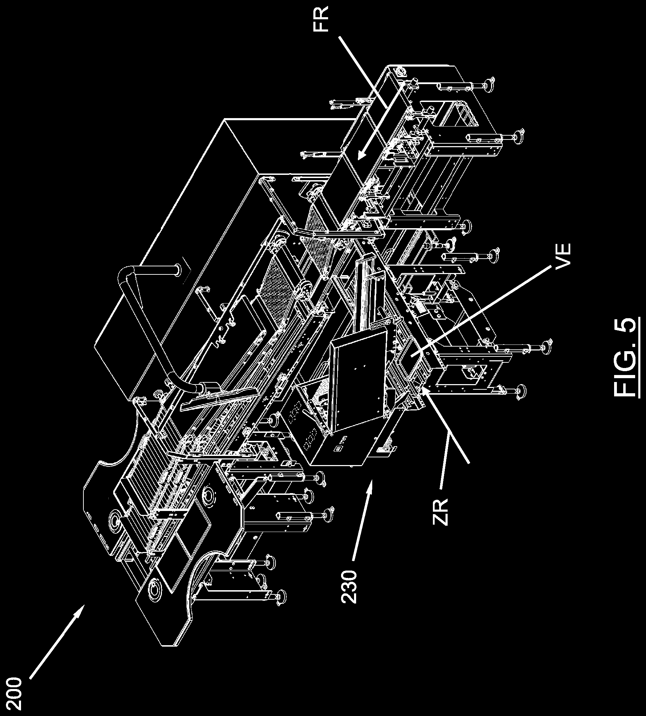

Schließlich ist die Produktfördervorrichtung 200 gemäß dem zweiten Ausführungsbeispiel in Figur 5 in einer weiteren perspektivischen Ansicht dargestellt, um den möglichen Aufbau der erfindungsgemäßen Produktfördervorrichtung 200 noch weiter zu verdeutlichen.

## Patentansprüche

1. Produktfördervorrichtung (100, 200) zur Förderung von Produkten (P) aus einem Lebensmittel, die Produktfördervorrichtung (100, 200) umfassend:
eine Fördereinheit (110), welche dazu eingerichtet ist, ein Produkt (P) entlang einer Förderrichtung (FR) zu fördern, und
eine Messvorrichtung (112), welche dazu eingerichtet ist, eine Produkteigenschaft, vorzugsweise ein Ist-Gewicht, des Produkts (P) zu erfassen, **dadurch gekennzeichnet, dass** die Produktfördervorrichtung (100, 200) ferner umfasst:
eine erste Umlenkeinheit (114, 214), welche in Bezug auf die Förderrichtung (FR) stromabwärts der Fördereinheit (110) angeordnet ist und dazu eingerichtet ist, das Produkt (P) auf der Grundlage der von der Messvorrichtung (112) erfassten Produkteigenschaft, vorzugsweise des von der Messvorrichtung (112) erfassten Ist-Gewichts, des Produkts (P) wahlweise zu wenigstens einer weiteren Fördereinheit (116, 216) der Produktfördervorrichtung (100, 200) oder einer zweiten Umlenkeinheit (118) zu fördern, und
die zweite Umlenkeinheit (118, 218), welche in Bezug auf die Förderrichtung (FR), vorzugsweise unmittelbar, stromabwärts der ersten Umlenkeinheit (114, 214) angeordnet ist und dazu eingerichtet ist, das Produkt (P) von der ersten Umlenkeinheit (114, 214) zu erhalten und das Produkt (P) auf Grundlage der von der Messvorrichtung (112) erfassten Produkteigenschaft, vorzugsweise des von der Messvorrichtung (112) erfassten Ist-Gewichts, des Produkts (P) wahlweise einer ersten Ausleiteinheit (120) oder einer zweiten Ausleiteinheit (122) zuzuführen.

2. Produktfördervorrichtung (100, 200) nach Anspruch 1,
**dadurch gekennzeichnet, dass** die Produkteigenschaft das Ist-Gewicht des Produkts (P) ist.

3. Produktfördervorrichtung (100, 200) nach Anspruch 2,
**dadurch gekennzeichnet, dass** die erste Umlenkeinheit (114, 214) dazu eingerichtet ist, in einem Fall, in welchem das Ist-Gewicht des Produkts (P) einem vorbestimmten Soll-Gewicht des Produkts (P) oder einem Gewicht entspricht, welches von dem Soll-Gewicht um höchstens eine vorbestimmte Abweichung abweicht, das Produkt (P) zu der wenigstens einen weiteren Fördereinheit (116, 216) zu fördern,
wobei die wenigstens eine weitere Fördereinheit (116, 216) insbesondere dazu eingerichtet ist, das Produkt (P) zu einer an oder in der Produktfördervorrichtung (100, 200) angeordneten Endposition (126, 226) oder zu einer der Produktfördervorrichtung (100, 200) in Förderrichtung (FR) nachgelagerten Verarbeitungseinheit zu fördern.

4. Produktfördervorrichtung (100, 200) nach Anspruch 2 oder 3,
**dadurch gekennzeichnet, dass** die erste Umlenkeinheit (114, 214) dazu eingerichtet ist, in einem Fall, in welchem das Ist-Gewicht des Produkts (P) um mehr als eine oder die vorbestimmte Abweichung von einem oder dem Soll-Gewicht des Produkts (P) abweicht, das Produkt (P) zu der zweiten Umlenkeinheit (118, 218) zu fördern.

5. Produktfördervorrichtung (100, 200) nach Anspruch 4,
**dadurch gekennzeichnet, dass**, wenn das Ist-Gewicht des Produkts (P) um mehr als die vorbestimmte Abweichung von dem Soll-Gewicht abweicht und geringer als das vorbestimmte Soll-Gewicht ist, die zweite Umlenkeinheit (118, 218) dazu eingerichtet ist, das Produkt (P), einer aus der ersten Ausleiteinheit (120) und der zweiten Ausleiteinheit (122) zuzuführen, und/oder
wenn das Ist-Gewicht des Produkts (P) um mehr als die vorbestimmte Abweichung von dem Soll-Gewicht abweicht und höher als das vorbestimmte Soll-Gewicht ist, die zweite Umlenkeinheit (118, 218) dazu eingerichtet ist, das Produkt (P) der anderen aus der ersten Ausleiteinheit (120) und der zweiten Ausleiteinheit (122) zuzuführen.

6. Produktfördervorrichtung (100, 200) nach einem der vorhergehenden Ansprüche,
**dadurch gekennzeichnet, dass** die erste und/oder die zweite Ausleiteinheit (120, 122) dazu eingerichtet ist/sind, das Produkt (P) zu einer jeweiligen Nachbearbeitungsposition (128) oder Nachbearbeitungseinheit zu fördern.

7. Produktfördervorrichtung (100, 200) nach einem der vorhergehenden Ansprüche,
**dadurch gekennzeichnet, dass** das Produkt (P) ein Lebensmittelrohprodukt ist oder ein Lebensmittelrohprodukt ist, welches in oder auf einem Verpackungselement (VE) angeordnet ist.

8. Produktfördervorrichtung (100, 200) nach einem der vorhergehenden Ansprüche,
**dadurch gekennzeichnet, dass** die erste und/oder die zweite Ausleiteinheit (120, 122), vorzugsweise an einem jeweiligen der zweiten Umlenkeinheit (118, 218) abgewandten Ende davon, um eine Schwenkachse (SA_1, SA_1') schwenkbar an der Produktfördervorrichtung (100, 200) angebracht ist.

9. Produktfördervorrichtung (100, 200) nach einem der vorhergehenden Ansprüche,
**dadurch gekennzeichnet, dass** die Messvorrichtung (112) der Fördereinheit (110) zugeordnet ist, vorzugsweise in der Fördereinheit (110) integriert ist.

10. Produktfördervorrichtung (100, 200) nach einem der vorhergehenden Ansprüche,
**dadurch gekennzeichnet, dass** die Produktfördervorrichtung (100, 200) wenigstens eine weitere Messvorrichtung umfasst, welche der ersten Umlenkeinheit (114, 214) und/oder der zweiten Umlenkeinheit (118, 218) zugeordnet ist, vorzugsweise in der ersten Umlenkeinheit (114, 214) und/oder der zweiten Umlenkeinheit (118, 218) integriert ist.

11. Produktfördervorrichtung (100, 200) nach einem der vorhergehenden Ansprüche,
**dadurch gekennzeichnet, dass** die wenigstens eine weitere Fördereinheit (116, 216) in einer Höhenrichtung (HR) verstellbar an der Produktfördervorrichtung (100, 200) angeordnet ist.

12. Produktfördervorrichtung (200) nach einem der vorhergehenden Ansprüche, **dadurch gekennzeichnet, dass** die Produktfördervorrichtung (200) ferner eine Verpackungselement-Bereitstellungseinheit (230) umfasst, welche dazu eingerichtet ist, der Produktfördervorrichtung (200), insbesondere der wenigstens einen weiteren Fördereinheit (216), ein oder mehrere, vorzugsweise leere, Verpackungselemente (VE) entlang einer Zuführrichtung (ZR) zuzuführen.

13. Produktfördervorrichtung (200) nach dem vorhergehenden Anspruch,
**dadurch gekennzeichnet,** die erste Umlenkeinheit (214) dazu eingerichtet ist, das Produkt in ein jeweiliges Verpackungselement (VE) einzulegen, wenn sich das jeweilige Verpackungselement (VE) im Bereich der ersten Umlenkeinheit (214) befindet.

14. Produktfördervorrichtung (200) nach Anspruch 12,
**dadurch gekennzeichnet, dass** die Zuführrichtung (ZR) vorzugsweise im Wesentlichen orthogonal zu der Förderrichtung (FR) verläuft.

15. Produktfördervorrichtung (100, 200) nach einem der vorhergehenden Ansprüche,
**dadurch gekennzeichnet, dass** die erste Umlenkeinheit (114, 214) und/oder die zweite Umlenkeinheit (118), vorzugsweise an einem jeweiligen der Fördereinheit (110) zugewandten Ende davon, um eine Schwenkachse (SA_2, SA2_') schwenkbar an der Produktfördervorrichtung (100, 200) angebracht ist/sind,
und/oder
dass die erste Ausleiteinheit (120) und die zweite Ausleiteinheit (122) in einer Draufsicht im Wesentlichen übereinander angeordnet sind, insbesondere so, dass die erste Ausleiteinheit (120) von der zweiten Ausleiteinheit (122) im Wesentlichen vollständig verdeckt ist oder umgekehrt.
